# DEMANDE DE BREVET EUROPEEN

(11) **EP 0 978 307 A1**
(43) Date de publication de la demande: **09.02.2000**
(21) Numéro de dépôt: 99401972.7
(22) Date de dépôt: 02.08.1999
(51) Int. Cl.: B01D 53/50, B01D 53/68, C02F 9/00

(54) **Procédé de traitement semi-humide des fumées incluant une décarbonation de l'eau pulvérisée sur les fumées.**

(30) Priorité: 05.08.1998 FR 9810067
(71) Demandeur: Alstom France SA, 75116 Paris (FR)
(72) Inventeur: Vandycke, Michel, 78950 Gambais (FR); Andre, Joseph, 59830 Bachy (FR)
(74) Mandataire: Lenne, Laurence

(57) **Abrégé**

Dans un procédé de traitement semi-humide des fumées pour éliminer de ces fumées au moins un agent polluant (HCL, SO₂, HF), selon lequel on pulvérise à l'intérieur d'un réacteur (1) sur les fumées à traiter, un mélange de lait de chaux provenant d'un premier circuit d'alimentation dont le débit est piloté par une mesure de la quantité d'agent polluant présente dans les fumées à la sortie du réacteur et d'eau industrielle provenant d'un second circuit d'alimentation dont le débit est piloté par une mesure de température des fumées à la sortie du réacteur, on effectue dans un bac placé en ligne sur le circuit d'alimentation en eau industrielle, un traitement de décarbonatation de l'eau industrielle et ce préalablement à son mélange avec le lait de chaux. Ce traitement de décarbonatation évite l'encrassement des buses de pulvérisation (10) du réacteur.

## Description

L'invention concerne le traitement des fumées produites par la combustion de déchets (ménagers, industriels, hospitaliers en autres) ou de combustibles fossiles (comme le charbon ou le fuel-oil) selon le principe dit semi-humide pour éliminer de ces fumées, les polluants tels que l'acide chlorhydrique (HCL), le dioxyde de soufre (S02) ou encore l'acide fluorhydrique (HF).

Le principe du traitement semi-humide des fumées consiste à pulvériser dans un réacteur sur les fumées à traiter, un mélange d'eau et de lait de chaux. La pulvérisation peut être réalisée de différentes manières, soit par un ou plusieurs atomiseurs rotatifs tournant à grande vitesse, soit par des pulvérisateurs fonctionnant à haute pression avec l'assistance de l'air comprimé.

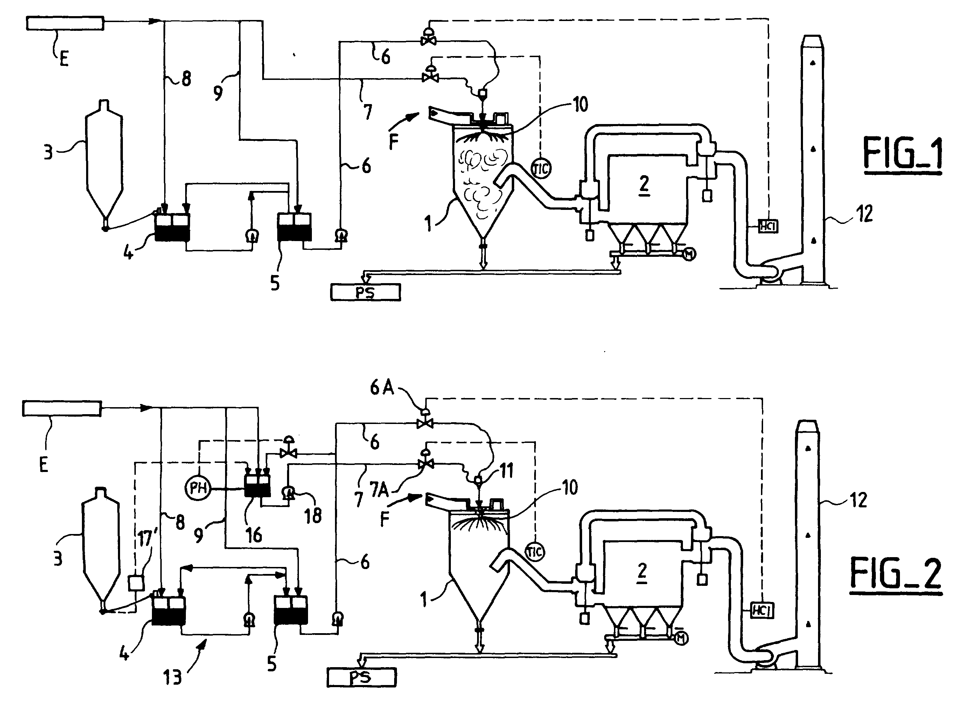

La figure 1 illustre un exemple d'installation pour la mise en oeuvre d'un procédé de traitement semi-humide des fumées. L'installation comprend principalement un réacteur 1 ou tour d'atomisation, un filtre à manches 2, un silo de stockage 3 de la chaux pulvérulente, un bac 4 de préparation de lait de chaux, un bac de stockage et de dilution 5 du lait de chaux, un circuit d'alimentation 6 du réacteur en lait de chaux et un circuit d'alimentation 7 en eau industrielle.

L'eau industrielle E est d'une part utilisée pour la préparation du lait de chaux dans le bac 4 via le circuit d'alimentation 8 et d'autre part pour alimenter les buses de pulvérisation 10 du réacteur 1 par l'intermédiaire du circuit d'alimentation 7. Le débit d'eau industrielle dans le circuit d'alimentation 7 est régulé par une mesure de la température TIC des fumées F mesurée en aval du réacteur, ici sur le conduit entre la sortie des fumées du réacteur et le filtre à manches 2. Une partie de l'eau industrielle E peut être dirigée vers le bac 5 par le circuit d'alimentation 9. L'eau industrielle E qui sert à alimenter le réacteur 1 ou les bacs 4 et 5 peut être remplacée par des effluents provenant par exemple d'un système de lavage humide comme c'est notamment le cas dans les installations de traitement combiné des fumées sans rejet liquide.

L'eau industrielle (ou les effluents) utilisée dans l'installation de la figure 1 contient des sels de dureté du type bicarbonate et carbonate de calcium ou de magnésium. Il est d'usage de caractériser la dureté de l'eau par le titre hydrométrique total, TH, qui représente la teneur en calcium (Ca) et en magnésium (Mg). On parle également de dureté carbonatée, c'est-à-dire de la teneur en bicarbonate et en carbonate de calcium et de magnésium. La dureté carbonatée est égale au titre alcalimétrique complet, TAC si la valeur TH est supérieure au TAC, ou à TH si la valeur TAC est supérieure à TH. En pratique, les valeurs TH et TAC sont comprises entre 5 et 60 degrés français pour la plupart des eaux industrielles.

Par ailleurs, l'eau industrielle a un PH proche de la neutralité (5.5 à 8) de sorte que l'espèce bicarbonate en solution est prépondérante.

Les effluents qui proviennent d'un système humide contiennent également des sels de dureté dont le comportement est le même que les sels de l'eau industrielle.

Le document de brevet EP-302522 mentionne l'intérêt de réduire la dureté de l'eau utilisée dans un procédé de traitement des fumées.

De façon usuelle, l'eau industrielle (ou les effluents) provenant du circuit d'alimentation 7 est rapidement mélangée avec le lait de chaux provenant du circuit d'alimentation 6 juste avant que le mélange passe à l'intérieur des buses de pulvérisation 10 du réacteur 1. Il a été constaté que ce mélange eau industrielle ou effluent - lait de chaux subissait une brutale augmentation du PH, provoquant la précipitation de carbonates de calcium ou de magnésium. Ce précipité naissant présentant un grand pouvoir incrustant, provoque rapidement le bouchage des buses de pulvérisation du réacteur ce qui nécessite l'arrêt de l'installation pour leur remplacement ou leur nettoyage.

Le but de l'invention est de remédier à cet inconvénient.

A cet effet, l'invention a pour objet un procédé de traitement semi-humide des fumées pour éliminer de ces fumées au moins un agent polluant, selon lequel on pulvérise à l'intérieur d'un réacteur sur les fumées à traiter, un mélange de lait de chaux provenant d'un premier circuit d'alimentation dont le débit est piloté par une mesure de la quantité d'agent polluant présente dans les fumées à la sortie du réacteur et d'eau industrielle provenant d'un second circuit d'alimentation dont le débit est piloté par une mesure de température des fumées à la sortie du réacteur, caractérisé en ce qu'on effectue sur le circuit d'alimentation en eau industrielle, un traitement de décarbonatation de l'eau industrielle et ce préalablement à son mélange avec le lait de chaux, le traitement de décarbonatation consistant à mélanger dans un bac (16) placé en ligne sur le circuit d'alimentation en eau industrielle, l'eau industrielle avec du lait de chaux ou de la chaux pulvérulente en quantité contrôlée pour obtenir dans le bac, une précipitation des carbonates sans excès de lait de chaux ou avec un très faible excès.

Avec ce traitement de décarbonatation, on obtient une précipitation des carbonates dans l'eau industrielle mais ce précipité ne présente pas de caractère incrustant et peut traverser les buses de pulvérisation du réacteur sans se déposer à l'intérieur de celles-ci.

Un exemple de mise en oeuvre du procédé selon l'invention est décrit ci-après en détail et illustré sur les dessins.

La figure 1 montre très schématiquement une installation de traitement semi-humide des fumées sans traitement particulier de l'eau industrielle.

La figure 2 montre schématiquement l'installation de traitement semi-humide des fumées de la figure 1 mais modifiée pour mettre en oeuvre un traitement de décarbonatation de l'eau industrielle.

Figure 2, l'installation de traitement des fumées F, qui peuvent être produites notamment par la combustion de déchets, comprend un réacteur 1 dans lequel sont amenées les fumées à traiter et sur lesquelles est pulvérisé par des buses de pulvérisation 10 placées sur le plafond du réacteur, un mélange d'eau industrielle E et de lait de chaud ou en variante un mélange d'effluents industriels et de lait de chaux. Ce mélange est réalisé dans un pot 11 placé en entrée des buses de pulvérisation 10. Le pot 11 est alimenté d'une part, par un circuit d'alimentation 7 en eau industrielle dont le débit est piloté, via une vanne pilote 7A, par une mesure de la température TIC à la sortie du réacteur, et d'autre part, par un circuit d'alimentation 6 en lait de chaux dont le débit est piloté, via une vanne pilote 6A, par une mesure de la quantité d'agent polluant restant présente dans les fumées en sortie du réacteur. La température TIC est ici prélevée sur le conduit entre la sortie des fumées du réacteur et le filtre à manches 2. La température de consigne est typiquement de l'ordre de 140°C lorsqu'il s'agit d'éliminer l'acide chlorhydrique des fumées. On voit sur la figure 2 que le pilotage du débit du circuit 6 est basé sur une mesure de la quantité de HCL présente dans les fumées sur le conduit reliant la sortie des fumées du filtre à manches 2 et la cheminée 12 d'évacuation des fumées traitées. A noter que la quantité de lait de chaux et d'eau industrielle dans le mélange à pulvériser sur les fumées doit être telle que la température des fumées en aval du réacteur est supérieure à la température de rosée aqueuse ce qui fait que les particules solides dans les fumées arrivent sèches dans le filtre à manches 2. Ces particules solides PS peuvent être récupérées par des trémies placées sous le réacteur 1 et sous le filtre à manches 2

Le circuit d'alimentation 6 en lait de chaux est raccordé en entrée au bac 5 de stockage et de dilution de lait chaux qui est couplé au bac 4 de préparation du lait de chaux par un circuit d'alimentation en boucle 13. Le bac 4 reçoit de la chaux pulvérulente provenant du silo 3 et de l'eau industrielle E par le circuit d'alimentation 8. Comme indiqué précédemment, le bac 5 peut en variante recevoir de l'eau industrielle E par le circuit d'alimentation 9.

Selon l'invention, on effectue sur le circuit d'alimentation 7 en eau industrielle du pot de mélange 11, un traitement en ligne de décarbonatation de l'eau industrielle par injection de lait de chaux ou de chaux pulvérulente afin de précipiter les bicarbonates présents dans l'eau sous la forme de carbonates et ce de façon contrôlée pour que cette réaction ne laisse pas de chaux en excès. Il est entendu que ce traitement s'applique de la même façon si il s'agit d'effluents industrielle à la place de l'eau industrielle. L'eau industrielle qui alimente le pot 11 de mélange est par conséquent exempte ou faiblement chargée en bicarbonates ce qui permet d'éviter l'encrassement des buses de pulvérisation 10.

La décarbonatation s'effectue dans un bac de transit 16 recevant l'eau industrielle à l'état brut et placé en ligne sur le circuit d'alimentation 7. Le lait de chaux injecté dans le bac 16 peut avantageusement provenir d'une dérivation 6C du circuit d'alimentation 6 en lait de chaux du pot de mélange 11. En variante, la chaux pulvérulente injectée dans le bac 16 peut provenir du silo de stockage 3. La quantité de lait de chaux ou de chaux pulvérulente injectée dans le bac 16 pour obtenir la décarbonatation de l'eau industrielle est réglée respectivement, via une vanne 17 ou un organe de dosage 17', par exemple une vis, sur la base d'une mesure du PH du mélange dans le bac 16 de telle sorte que le PH soit compris entre 10 et 12,6 et de préférence entre 10 et 12,5 pour que le milieu soit assez basique pour obtenir la précipitation des bicarbonates tout en évitant la présence de lait de chaux en excès dans le bac 16. Des mesures ont montré qu'avec ce traitement de décarbonatation, le TH et le TAC de l'eau industrielle fournie au pot de mélange 11 restaient inférieurs à 10 degrés français et le plus souvent étaient proches de 0. Le bac 16 peut être équipé d'un système d'agitation pour améliorer la réaction de décarbonatation. L'eau industrielle traitée et les précipités carbonatés sont repris en sortie du bac 16 par une pompe 18 qui les envoie via le circuit d'alimentation 7 vers le pot de mélange 11.

## Revendications

1. Un procédé de traitement semi-humide des fumées pour éliminer de ces fumées au moins un agent polluant (HCL, SO₂, HF), selon lequel on pulvérise à l'intérieur d'un réacteur (1) sur les fumées à traiter, un mélange de lait de chaux provenant d'un premier circuit d'alimentation (6) dont le débit est piloté par une mesure de la quantité d'agent polluant présente dans les fumées à la sortie du réacteur et d'eau industrielle ou d'effluents, notamment des effluents provenant d'un système de lavage humide des fumées, provenant d'un second circuit d'alimentation (7) dont le débit est piloté par une mesure de température des fumées à la sortie du réacteur, caractérisé en ce qu'on effectue sur le circuit d'alimentation en eau industrielle, un traitement de décarbonatation de l'eau industrielle et ce préalablement à son mélange avec le lait de chaux, le traitement de décarbonatation consistant à mélanger dans un bac (16) placé en ligne sur le circuit d'alimentation en eau industrielle, l'eau industrielle avec du lait de chaux ou de la chaux pulvérulente en quantité contrôlée pour obtenir dans le bac, une précipitation des carbonates sans excès de lait de chaux ou avec un très faible excès.

2. Le procédé selon la revendication 1, dans lequel la quantité de lait de chaux ou chaux pulvérulente mélangée à l'eau industrielle dans le bac (16) est contrôlée pour que le PH du mélange dans le bac soit compris entre 10 et 12,6 et de préférence entre 10 et 12,5.

3. Le procédé selon l'une des revendications 1 ou 2, dans lequel le bac (16) est alimenté en lait de chaux par une dérivation (6C) du circuit d'alimentation en lait de chaux (6).

4. Le procédé selon l'une des revendications 1 ou 2, dans lequel le bac (16) est alimenté en chaux pulvérulente provenant d'un silo de stockage (3) de chaux pulvérulente servant à la préparation du lait de chaux.
